# EUROPEAN PATENT APPLICATION

(11) **EP 0 890 461 A1**
(43) Date of publication of application: **13.01.1999**
(21) Application number: 97600006.7
(22) Date of filing: 08.07.1997
(51) Int. Cl.: B60C 23/00

(54) **Compressed air circuit for vehicles**

(71) Applicant: Karramanoukian, Haroutoun, Aleppo (SY)
(72) Inventor: Karramanoukian, Haroutoun, Aleppo (SY)
(74) Representative: Argyriadis, Korinna

(57) **Abstract**

A compressed air circuit automatically working to maintain the fixed design pressure of the tyres of all vehicles running on rubber tyres filled with air, characterized in that in case of low pressure the lost air is compensated through an air compressor (3) working by means of a small dynamo (2), metallic pipes (4), pressure regulators (6) and non-return valves, and where in case of high pressure the additional volume of air is discharged by means of a reverse non-valve (discharge valve), consequently returning the pressure back to its normal condition or designed one as specified by the manufacturer.

## Description

The invention relates to a compressed air circuit that can be added to the basic design of all types of vehicles' rubber tyres filled with air. The circuit operates automatically by the vehicle start key. Its aim is to maintain the designed air pressure of the tyre regular, i.e. it increases the tyre air pressure when it is decreased, and decreases it when it is increased. This can take place while the vehicle is being driven.

### Background of the invention

Small passenger cars, large transportation vehicles (buses) and also freight trucks, namely all types of vehicles that run on air-filled rubber tyres, are subject to accidents, even deadly ones, due to the sudden damage (puncture) of one of their tyres. This damage (puncture) may result in the vehicle tumbling down, collapsing and decease of a great number of persons thereinside, in addition to the psychological and financial loss and damages caused by such kind of accidents.

Up to this moment, especially in the field of car industry and in spite of the fact that cars and vehicles run on air-filled tyres, car manufacturers have not taken any industrial measure to improve the tyre working system, in order to avoid accidents due to puncture of tyres.

The present invention is a compressed air circuit designed to insure ultimate safety and protection for human beings and cars. It is actually a positive action and a great improvement for the car industry. It is designed to save time, guarantee passengers safety and to protect vehicles from accidents due to the increase or decrease of tyres air pressure.

Even in case the car and its engine are not working for a few hours, the circuit does not allow tyres discharge as part of the circuit works automatically, as the air compressor tank will be full of air to its maximum capacity and consequently any shortage of tyres air will be immediately compensated through the air available in the tank without the need for operating the circuit. This can carry on until the tank becomes completely empty of air. The air circuit operates automatically while the vehicle is being driven, and when a defect takes place in the tyres air pressure (either increase or decrease of pressure), at any speed whatsoever, the air circuit will act to decrease the pressure when it becomes higher than the designed one, or increase the pressure when it becomes lower than the designed one, wihout the need for the driver to stop the vehicle.

Furthermore, a light signal is to be installed in the control panel in front of the driver to warn the driver and alarm him of any damage or danger taking place in a vehicle tyre. For extra safety, it is possible to add a sound alarm, in addition to the light one, which can assure the presence of danger when the driver does not pay attention to the light signal.

### Brief description of the invention

The present invention is a compressed air circuit, the aim of which is to regulate pressure of air within rubber tyres. This circuit can be added and adjusted to the basic design of any vehicle and of any type, be it a passenger car, a passenger transport bus, a freight truck etc.

A special warning system (alarm) is to be installed on the vehicle control panel. Any suitable method for warning may be chosen, it may be a sound or a light. The goal is to warn the driver of defect presence in one of his vehicle tyres, when the defect is a decrease of air pressure less than the average specified by the manufacturer.

In this case, namely air pressure decrease, the warning signal (alarm) comes out on the control panel of the vehicle. If this alarm lasts for more than a preset time period, this means that the defect of tyre is great and that the compressor cannot compensate the lost air, because the hole is very great and wide, volume of the lost air is also big, and consequently the vehicle and everybody therein are in a very serious condition. In this case, the driver has to slow down his vehicle speed and resort to the nearest parking area or fuel station to check the tyres and take necessary remedial actions.

The compressed air circuit operates by the vehicle starting key, i.e. as soon as the start key is turned on, the circuit starts working if necessary in case of low pressure on one tyre or all tyres. For example, if the vehicle was parked and a decrease of air pressure took place in one of its tyres because of air leakage due to a puncture of one tyre by means of a sharp instrument, or the defect of the non-return valve installed on every tyre to prevent air leakage, the driver would not be obliged to waste his time to fill the tyre(s) with air, as volume of the lost air may be significant (50 % approximately), but he may only turn on the start key which starts the operation of the air circuit and continue driving his vehicle calmly and safely. The circuit will directly and automatically compensate the lost quantity of air and returns the tyres air pressure to the design pressure specified by the manufacturer. If the pressure decrease is so great and volume of the lost air is about 70-80 % or 100 %, the driver will turn on the start key, wait few moments to compensate the lost air and carry on driving his vehicle. While the vehicle is running, the air circuit will act to return the tyres air pressure back to its level designed by the manufacturer.

The defect in tyre may be due to increase of air pressure in it, which always happens during long distance travels, because of the increase of temperature of air inside the tyre and its expansion, consequently leading to increase of air pressure. The present invention does not allow increase of air pressure in tyre at all, as there is a reverse non-return valve (discharge charge), that directly decreases the pressure and eliminates pressure increase problems before they take place, which entirely eliminates this danger.

Causes of air pressure increase inside vehicles tyres are related to the following:
1. Increase of the external atmosphere temperature.
2. Tyres vibration and contact with the ground when travelling for long distances and periods, especially in summer when the temperature of roads asphalt is very high.
3. Repeated usage of brakes during the long travel ways, which leads to generation of high temperatures on the brake disc. This heat is transferred to the drum metal, then to tyres rubber, and consequently leads to increase of the temperature of the air inside the tyre, which leads to increasing its pressure, the tyre blowing up and explosion. This usually takes place in transportation buses, which transport great numbers of passengers, in addition to the different types of big freight trucks.

### Brief description of the drawings

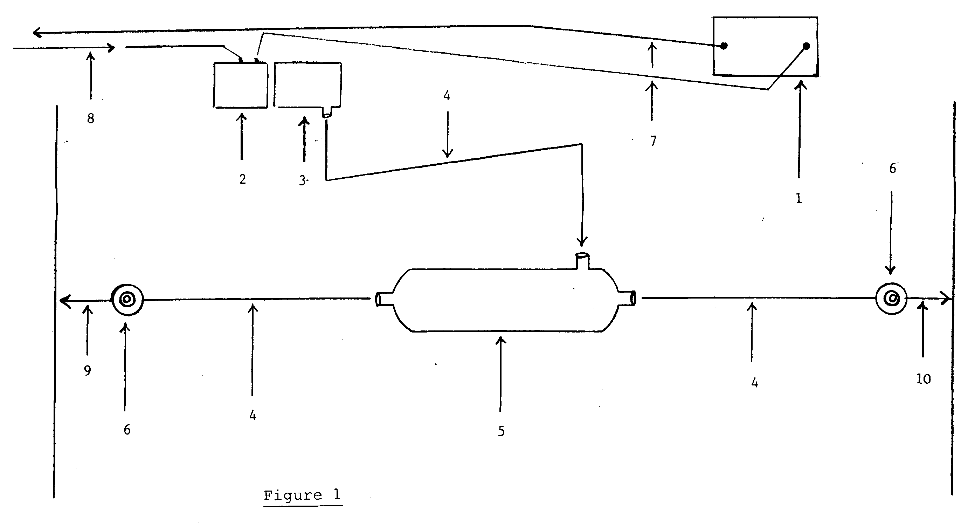

Fig. 1 shows the air circuit with its mechanical and electrical parts.
Fig. 2 shows the axle upon which the breaking disc is mounted.
Fig. 3 shows the holder (17) of the pipe connection in detail.
Fig. 4 shows the mechanical apparatus (42) for directing the air coming from the regulator (6).
Fig. 5 shows details of the circular motion transmission system (18) of Fig. 2.
Fig. 6 shows details of the circular motion transmission system (18) of Fig. 2.
Fig. 7 shows the wheel and the non-return valves.
Fig. 8 shows the weight mounted on the holes of the metallic frame of the tyre drum.
Fig. 9 shows the connecting pipe (28) between the non-return valve (27) and the circular motion transmission system (18).

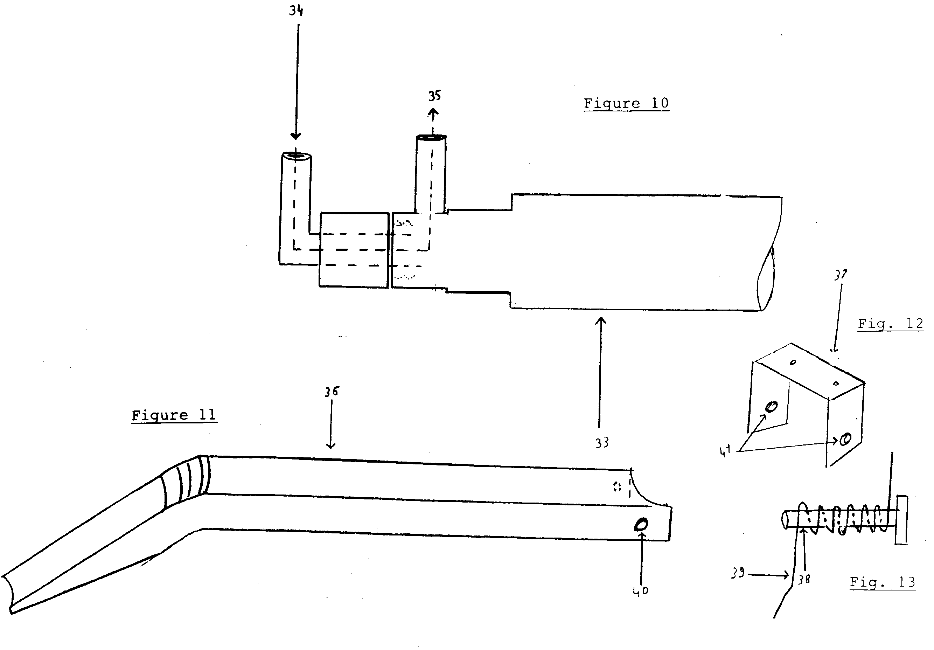

Fig. 10 shows part of the wheel and the mounting (33) for installation and fixation of the circular motion transmission system (18) in detail.
Fig. 11 shows the holder of the pipe connection (28).
Fig. 12 shows parts of the holder of the pipe connection (28).
Fig. 13 shows the flexible joint - pipe connection (28).

### Detailed description of the invention

The present invention is a circuit working on compressed air, the work of which is to maintain the designed pressure of the air in vehicles tyres, as recommended by the manufacturer.

The air circuit consists, in general, of an air generation system (compressor), air distribution pipes, non-return valves, air tank and air pressure regulators. All of the above listed parts constitute one integrated air circuit, that works automatically on regulating the designed air pressure inside vehicle tyres.

As soon as the start key is turned, the compressor sensor acts to detect whether there is a decrease of air pressure in one tyre or the four tyres. This sensor works by the battery (1) to dynamo (2), then the compressor (3) starts working to pump air to the air tank (5) through metallic pipes (4). Then air is to be distributed from the tank (5) through the air transmission metallic pipes (4) to two air pressure regulators (6), one of which is frontal, to regulate air pressure of the front tyres. The regulated air is being transported through pipe connection (10) to the front tyres. The other one is rear air regulator set to regulate air pressure of the rear tyres. The regulated air is being transported through a pipe connection (9) to the rear tyres. Then air is being transported through the pipe connection (10) to the base of wheel axle fixing (12). Air can be entered through a flexible hose joint (11) to the tyre axle (13), through the elastic and flexible joint (11) to air passage (19) in the tyre axle (13). Then air carries on its passage, passing from the circular motion transmission system (18) to the circular metallic pipe (20), then to air outlet (30), on which a non-return valve as regulator (6) is installed. Then air is transported within the pipe connection (28) between the non-return valve (27) and the circular metallic pipe (20). The non-return valve (27) and the circular metallic pipe (20) can be connected by means of a flexible joint - pipe connection (28), on both ends of which two pins are fixed to open the non-return valves between the two ends, to keep air passage between the non-return valve (27) and the circular metallic pipe (20) open. Between the two ends (27) and (20) and at the end of the pipe connection (28), there is a metallic joint of two openings where non-return valves (31) and (32) are fixed in parallel with the pipe connection (28).

This valve operates as follows: In emergencies, i.e. when the compressor (3), the dynamo (2) turning the compressor, breaks one of the pipes connecting air, or the breaking of one pipe intentionally by a person, the function of valve (31) will be maintaining the pressure of air equal in all tyres, due to the presence of the non-return valve (32) installed thereon.

At the same time, in case of installing the connection (28), the valve (31) function will be preventing discharge of the air present within tyres, and consequently maintaining the designed pressure specified by the manufacturer. A valve is also fixed on the opening (32) to discharge the surplus air, in cases of pressure increase in tyres due to the expansion of the present air because of temperature increase due to friction.

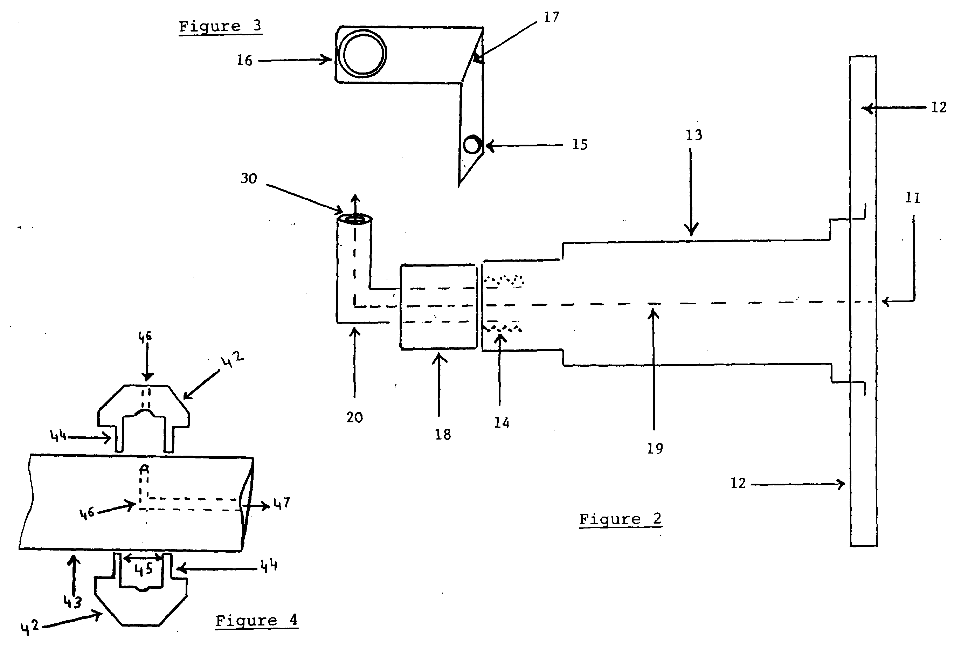

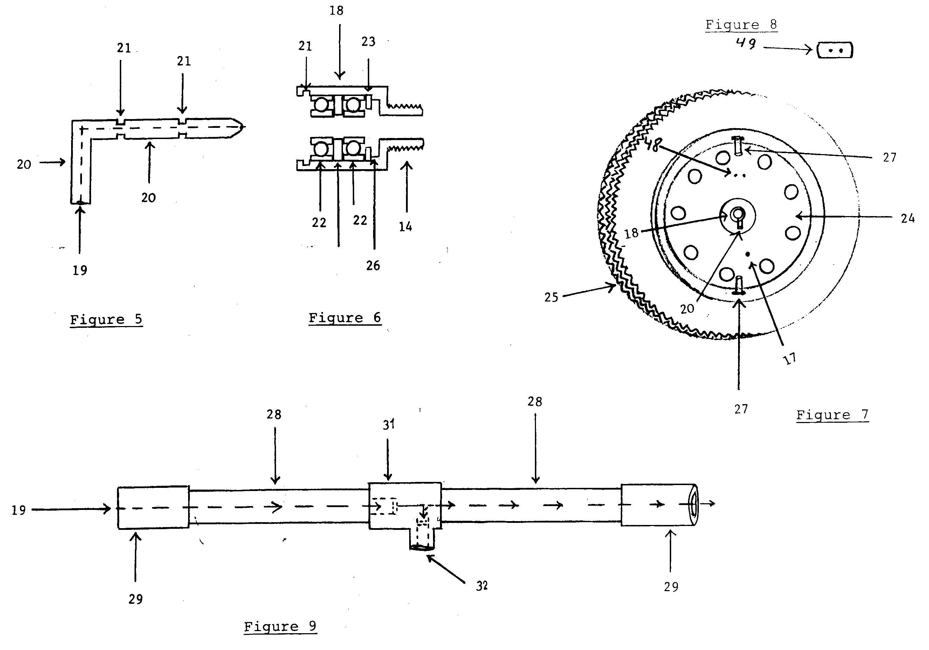

In case of finding difficulty in making the hole (11) in axle (13), as this action is to be performed in the side where the differential hub is, axle (13) can be punctured from outside, without touching the differential hub, and the pattern will be like in Fig. 4. As for the other side, where there is no differential hub, the hole pattern will be as in Fig. 2. If air entrance is from the side of which there is no differential hub, from the axle (13) through hole (11), the air outlet will be through the hole (30).

In the place where the differential hub is, air enters through hole (34) and gets out from hole (35). For this purpose the mechanical apparatus (42) for directing the air coming from the regulator (6), which is easily manufactured and installed on axle (43) from the interior side behind the disc directly, is designed.

A holder (36) of the flexible pipe holder (37) is designed to prevent the friction of the pipe connection (28) with the interior side of the vehicles right and left side wheel cover or even with the tyre itself. This holder assists also to prevent the detachment of the pipe connection (28) from its fixing place.

The addition of the flexible pipe connection (28) on the wheel may lead to changing the balance of the wheel rotation. Therefore, two holes (48) should be opened on the metallic frame of the tyre drum and a suitable weight (49) is to be installed on the two holes (48), which make the wheel return to its designed balance.

Following is an explanation and statement of the numbers and their indices illustrated in the Figures attached with the description of the present invention:
1. Battery of the vehicle.
2. Small dynamo to run the compressor.
3. Air compressor.
4. Metallic pipes for air transportation.
5. Air tank.
6. Air regulator, qty: /2/.
7. Electric cable from the battery to the small dynamo (2).
8. Electric cable from the start key to the small dynamo (2).
9. Pipe for air transport from the regulator (6) to the rear tyres.
10. A pipe for air transport from the regulator (6) to the front tyres.
11. Hose joint forming air access within wheel axle (13).
12. Disc axle fixing the mounting of the wheel axle (13).
13. Wheel axle.
14. Basis for circular motion transmission system (18).
15. Hole to fix the holder (17).
16. Hole with rubber for fixing the pipe connection (28).
17. Holder of pipe connection (28) fixation.
18. Circular motion transmission system.
19. Hole in wheel axle (13) to transport the air to tyre.
20. Circular metallic pipe connected by means of a ball bearing (22) with the system of circular motion transmission (18).
21. Hole forming the base for the ball bearing (segment) mounted on the circular motion transmission system (18).
22. Ball bearing connections on the circular motion transmission (18).
23. Washer.
24. Tyre drum.
25. Tyre.
26. Air leakage prevention base (rubber gasket).
27. Non-return valve to fill the tyre with air.
28. Pipe connection between the non-return valve (27) and the circular metallic pipe (20).
29. Pipe connection well sealed to prevent air leakage while feeding the tyre with air.
30. Pipe connection that forms outlet (11) within wheel axle (13) at the end of which a non-return valve as regulator (6) is to be installed.
31. Non-return valve.
32. Non-return valve.
33. Mounting for installation and fixation of circular motion transmission (18).
34. Hole as inlet for air on the side of the differential hub.
35. Hole as outlet for air on the side of the differential hub.
36. Holder.
37. Holder base
38. Small axle (pairno) to fix the holder (36) on the base (37).
39. Flexible spring.
40. Fixing hole corresponding on hole (41).
41. Hole for holder base (37).
42. Mechanical apparatus for directing the air coming from the regulator (6).
43. Axle of the differential.
44. Ball bearing connections.
45. Gaskets centres to prevent air leakage.
46. Air inlet hole between the two gaskets.
47. Air outlet hole at the end of axle (13).
48. Holes on metallic frame of tyre drum.
49. Weight on holes (48).

## Claims

1. A compressed air circuit automatically working to maintain the fixed design pressure of the tyres of all vehicles running on rubber tyres filled with air, characterized in that in case of low pressure the lost air is compensated through an air compressor (3) working by means of a small dynamo (2), metallic pipes (4), pressure regulators (6) and non-return valves, and where in case of high pressure the additional volume of air is discharged by means of a reverse non-valve (discharge valve), consequently returning the pressure back to its normal condition or designed one as specified by the manufacturer.

2. The use of the compressed air circuit according to claim 1 in all vehicles for passengers, transport and freight.
